# EUROPÄISCHE PATENTSCHRIFT

(11) **EP 2 176 185 B1**
(45) Veröffentlichungstag und Bekanntmachung des Hinweises auf die Patenterteilung: **16.03.2016**
(21) Anmeldenummer: 08784251.4
(22) Anmeldetag: 23.06.2008
(51) Int. Cl.: C03C 17/36, B23K 1/19, C03C 27/04, C03C 27/06, C03C 27/08, B23K 35/26, B23K 35/30, B23K 35/00, B23K 35/02

(54) **VERFAHREN ZUM DAUERHAFTEN VERBINDEN ZWEIER KOMPONENTEN DURCH LÖTEN MIT GLAS- ODER METALLLOT**
METHOD FOR THE PERMANENT CONNECTION OF TWO COMPONENTS BY MEANS OF GLASS OR METAL SOLDER
PROCÉDÉ POUR RELIER DE MANIÈRE DURABLE DEUX COMPOSANTS PAR SOUDURE AU MOYEN D'UN ALLIAGE D'APPORT EN VERRE OU EN MÉTAL

(30) Priorität: 23.06.2007 DE 102007029031
(43) Veröffentlichungstag der Anmeldung: 21.04.2010
(73) Patentinhaber: Fraunhofer-Gesellschaft zur Förderung der angewandten Forschung e.V., 80686 München (DE)
(72) Erfinder: HAGEN, Jan, 79106 Freiburg (DE); FABER, Thorsten, 79106 Freiburg (DE); KÜBLER, Rainer, 79106 Freiburg (DE); KLEER, Günter, 79256 Buchenbach (DE)
(74) Vertreter: Rösler, Uwe
(86) Internationale Anmeldenummer: PCT/DE2008/001049
(87) Internationale Veröffentlichungsnummer: WO 2009/000256

(56) Entgegenhaltungen:
- GB-A- 691 984
- US-A- 5 294 241
- US-B1- 6 392 824
- "Gmelins Handbuch der anorganischen Chemie" 1962, VERLAG CHEMIE , WEINHEIM , XP002500565 Chrom, Teil A, Lieferung 1 Seite 230
- Week 198549, Derwent Publications Ltd., London, GB; AN 1985-307940 -& JP S60 215 585 A (NEC CORP) 28 Oktober 1985

## Beschreibung

### Technisches Gebiet

Die Erfindung bezieht sich auf ein Verfahren zum dauerhaften Verbinden zweier Komponenten, von denen wenigstens eine Komponente aus einem elektrisch nicht leitfähigem Material besteht, durch Löten unter Verwendung eines Glas- oder Metalllotes als Lotmaterial, bei dem auf mindestens eine der beiden Komponenten jeweils ein eine Haftung vermittelndes Schichtsystem aufgebracht wird, auf das das Lotmaterial aufgebracht wird, das mittel- oder unmittelbar mit der anderen Komponente in Kontakt gebracht wird und auf eine für das Lotmaterial charakteristische Lottemperatur erwärmt wird und nach Erkalten zu einer dauerhaften Lötverbindung zwischen beiden Komponenten führt.

### Stand der Technik

Für eine Vielzahl von Anwendungen, beispielsweise auf dem Gebiet der Optik oder Messtechnik, müssen dauerhafte Verbindungen zwischen Komponenten aus verschiedenen oder gleichartigen Werkstoffen, z.B. Glas mit Glas oder Glas mit Metall, hergestellt werden, an die verschiedenartige Ansprüche gestellt werden, beispielsweise sollen derartige Verbindungen mechanisch robust und gegenüber äußeren Umwelteinflüssen, wie beispielsweise elektromagnetische Strahlung, Feuchtigkeit, Temperatur um nur einige zu nennen, beständig sein. Um diesen Ansprüchen gerecht zu werden, haben sich Lötverbindungen als besonders geeignet erwiesen, um zwei Komponenten dauerhaft miteinander zu verbinden, von denen wenigstens eine Komponente aus einem elektrischen, nicht leitfähigen Material, vorzugsweise aus einem glasartigen Material, wie Quarzglas, Floatglas, z.B. ESG (Einscheibensicherheitsglas), VSG (Verbundsicherheitsglas) und TSG (Teilvorgespanntes Sicherheitsglas) oder einem keramisches Material besteht. Hierzu werden an sich bekannte metallische Lotmaterialien oder Glaslote zur Schmelze und auf die Oberflächen der miteinander zu verbindenden Komponenten gebracht, um als Haft- und Bindeschicht zwischen beiden Komponenten zu dienen. Es zeigt sich jedoch, dass die bekannten Lotmaterialien die Oberflächen insbesondere von elektrisch nicht leitfähigen Werkstoffen sowie auch von vielen metallischen Werkstoffen nur in ungenügendem Maße benetzen, d.h. sie gehen keine haftstabile Oberflächenverbindung mit den Komponenten ein, so dass die miteinander zu verfügenden Oberflächen der Komponenten zunächst mit einer lotfähigen Schicht überzogen werden müssen, die eine genügende Haftverbindung mit der jeweiligen Oberfläche der Komponente eingehen. Sehr häufig finden hierzu zumeist aus drei Schichtkomponenten bestehende Schichtsysteme Anwendung, die aus Gründen eines verbesserten Haftvermögens und zugleich verbesserter Löteigenschaften auf die Oberfläche der jeweils zu verbindenden Komponenten aufgebracht werden. So bestehen die zumeist dreischichtigen Schichtsysteme aus einer unmittelbar auf die Komponentenoberfläche(n) aufzubringenden Haftvermittlerschicht, eine darauf aufzubringende lötfähige Schicht und letztlich aus einer auf die lötfähige Schicht aufzubringenden Oxidationsschutzschicht.

Üblicherweise wird die Schichtabfolge im Wege von Sputterverfahren oder galvanischen Abscheideverfahren hergestellt, vorzugsweise erfolgt dies im Rahmen einer Vorbehandlung, bei der das Mehrkomponentenschichtsystem jeweils auf die Oberflächen der miteinander zu verfügenden Komponenten aufgebracht wird. Zwischen den beschichteten Fügeoberflächen wird letztlich das Lotmaterial aufgebracht, das durch Erhitzen auf eine für das jeweilige Lotmaterial charakteristische Temperatur, die sogenannte Schmelztemperatur, und nachfolgendem Erkalten zu einer haftstabilen Lötverbindung zwischen beiden Komponenten führt. Als Lotmaterial wird je nach Materialart der miteinander zu verfügenden Komponenten Metalllote oder Glaslote verwendet.

So geht beispielsweise aus der EP 0 901 992 A2 ein Lötverfahren für optische Materialien an Metallfassungen hervor, bei dem zumindest auf der Oberfläche der aus optischem Material, vorzugsweise Quarzglas bestehenden Komponente eine aus CrAl oder TiW bestehende Haftvermittlerschicht aufgebracht wird, auf die eine Diffusionssperrschicht in Form reinen Nickels aufgesputtert wird. Zudem wird eine als Oxidationsschutzschicht dienende Goldschicht auf den Schichtverbund aufgetragen. Die Oberfläche der Metallfassung hingegen wird lediglich mit einer aus Nickel oder Kupfer bestehenden Benetzungshilfsschicht versehen, auf die das Lotmaterial, eine sogenannte Zinn- oder Indiumlegierung aufgetragen wird, und die bei Löttemperaturen unterhalb 300°C in Schmelze übergeht und mit dem auf dem Glasmaterial aufgebrachtem Schichtsystem nach entsprechendem Erkalten eine innige und haftfeste Lötverbindung eingeht.

Aus der DE 10 2005 024 512 B3 ist ein Verfahren zur Herstellung von in ein Gehäuse hermetisch dicht einlötbare Fensterelemente zu entnehmen, bei dem als Haftvermittlerschicht eine Aluminiumschicht und/oder eine Titan oder Titanlegierung aufgebracht wird. Als lötfähige Schicht dienen im beschriebenen Fall Platin, Eisen/Nickel, Nickel oder Palladium, die von einer aus Gold bestehenden Oxidationsschutzschicht überzogen wird.

In der US 2003/0174999 A1 ist ein Verfahren zum Verbinden einer optischen Glasfaser an eine Metallhalterung im Wege einer Lötverbindung beschrieben, bei der die Glasfaser mit einem Schichtsystem versehen wird, das zunächst eine Haftvermittlerschicht aufweist, die aus WTi, CrAu, Cr, NiCr besteht, auf die eine lötfähige Schicht aufgebracht wird, bestehend aus Nickel oder Platin, die letztlich mit einer Goldoxidationsschutzschicht überzogen wird.

Der DE 692 18 004 T2 ist ein flußmittelloses Lötververfahren zum Verbinden eines Glasteils mit einem Metallteil zu entnehmen, wobei auf dem Glasteil ein Schichtsystem aufgebracht wird, das als Haftvermittlerschicht Titan, als lötfähige Schicht Nickel und als Oxidationsschutzschicht eine Nickel-Bohrlegierung oder Gold aufweist.

Der DE 34 85 859 T2 ist ein Verfahren zum Verbinden von keramischen und metallischen Körpern zu entnehmen, bei dem als Haftvermittlerschicht eine Verbindung aus einem Oxid und einem Metall mittels Sprühüberzug oder Ionenplattieren auf die Oberfläche des keramischen Körpers gebracht wird, die im Wege des Erhitzens eine metallurgische Verbindung mit dem keramischen Körper eingeht. Nachfolgend erfolgt das Fügen mittels Hartlöten mit dem metallischen Körper.

Der DE 10 2005 028 704 A1 ist ein Halbleiterbauteil mit in Kunststoffgehäusemasse eingebetteten Halbleiterbauteilkomponenten zu entnehmen, bei dem die Halbleiterbauteilkomponenten mittels einer Haftvermittlerschicht ohne weiteren Zusatz eines Lotmaterials mit dem Kunststoffgehäuse gefügt sind und die Haftvermittlerschicht über eine nanoskalige Oberflächenstrukturierung verfügt, durch die die Fügung mittels Formschluss zum jeweiligen Fügepartner gewährleistet wird.

Nachteilig wirkt sich beim Einsatz von aus Metall bestehenden Haftvermittlerschichten, wie dies beim vorstehend zitierten Stand der Technik durchwegs der Fall ist, dass sich die thermischen Ausdehnungskoeffizienten von der Metallschicht und dem Werkstoff, aus dem die zu fügenden Komponenten bestehen, in der Regel stark unterscheiden. Hinzu kommt, dass die Haftfestigkeit metallischer Schichten auf nicht elektrisch leitenden Substratoberflächen, wie beispielsweise glasartige oder kristalline Materialien, häufig deutlich niedriger ist als auf metallischen Substratoberflächen. Diese Faktoren können beim Aufheizen des Lötverbundes zur Ausbildung hoher transienter mechanischer Eigenspannungen, wie beispielsweise Zug- oder Druckspannung, innerhalb des Schichtverbundes oder der Substratoberfläche führen, die im schlimmsten Fall zur Bildung von Rissen in der Schicht oder im Substratmaterial oder zur Ablösung der jeweiligen Haftvermittlerschicht von den Substratoberflächen bereits beim Löten führen. Auch beim Abkühlen des Lotes kann es zu stark ausgeprägten mechanischen Eigenspannungen in der Grenzfläche zwischen dem Lotmaterial und den aufgebrachten Schichtsystemen kommen, die zum Schichtversagen führen können. Es liegt auf der Hand, dass durch schichtinhärente Eigenspannungen die Festigkeit des Lotverbundes herabgesetzt wird und im schlimmsten Falle zum Versagen des Lotverbundes bereits bei der Einwirkung geringer mechanischer Belastungen führen kann.

Ein weiterer Nachteil von aus Metallen bestehenden Haftvermittlerschichten ist darin zu sehen, dass aufgrund der vergleichsweise hohen Reflexionswerte für IR-Strahlung die Metallschichten eine Wärmebarriere darstellen, wodurch es schwieriger wird, die zum Aufschmelzen des Lotmaterials erforderliche Wärme effizient in das Lotmaterial einzuleiten, bzw. es sind höhere Heizleistungen erforderlich, die zur höheren thermischen Belastungen der beteiligten Komponenten und/oder zu längeren Prozesszeiten führen.

Der Druckschrift GB 691,984 ist ein Verfahren zur Herstellung eines gasdichten Verbundes zwischen Glas- und einem Metallkörper zu entnehmen. Insbesondere wird eine Verbindung zwischen Drähten aus CrFe-Legierungen und Glas beschrieben. Hierzu werden die CrFe-Drähte mit einem Füllmedium vorimprägniert, um die im Rahmen eines nachfolgenden Vakuum-Prozesses entstehenden, schädlichen Oberflächenrisse in den Drähten zu füllen. Die Drähte werden hierzu zur Rotglut geheizt und mit einer Suspension, bestehend aus Na₂B₄O₇+10 H₂O und einem Metalloxid, beispielsweise Chromoxid, in Kontakt gebracht. Dieses Füllmedium bildet bei ca. 88°C eine Art "Glaslot" aus, das die Oberflächenrisse zu füllen vermag und darüber hinaus einen gasdichten Verbund zwischen dem Draht und einem Glas herstellt.

Der Druckschrift US 5294241 ist ein Verfahren zur Herstellung einer Lötverbindung zwischen einer aus Titan bestehenden Komponente und einem Glaspartner beschrieben, bei dem die Oberfläche der Titankomponente nitriert wird und anschließend der Glaspartner zum Schmelzen gebracht wird, wodurch dieser den mit einer Titan-Nitrit-Schicht überzogenen Titankörper vollständig benetzt. Hierdurch entsteht ein fester spezifischer Fügeverbund, der einzig und allein auf der Reaktion zwischen einem in Schmelze gebrachten Glaskörper mit einer Titan-Nitrit-Schicht beruht.

### Darstellung der Erfindung

Der Erfindung liegt die Aufgabe zugrunde, ein Verfahren zum dauerhaften Verbinden zweier Komponenten, von denen wenigstens eine Komponente aus einem elektrisch nicht leitfähigem Material besteht, vorzugsweise aus einem glasartigen Material, durch Löten unter Verwendung eines Glas- oder Metalllotes als Lotmaterial, bei dem auf mindestens einer der beiden Komponenten jeweils ein eine Haftung vermittelndes Schichtsystem aufgebracht wird, auf das das Lotmaterial aufgebracht wird, das mittel- oder unmittelbar mit der anderen Komponente in Kontakt gebracht wird und auf eine für das Lotmaterial charakteristische Lottemperatur erwärmt wird und nach Erkalten zu einer dauerhaften Lötverbindung zwischen beiden Komponenten führt, derart weiterzubilden, dass Maßnahmen getroffen werden sollen, um die bei bisher bekannten Lotverbindungen auftretenden mechanischen Eigenspannungen gänzlich oder zumindest größtenteils zu vermeiden, um eine dauerhafte und belastbare Fügeverbindung zwischen den Komponenten zu schaffen. Neben dem Aspekt der Verbesserung der Haftfähigkeit zwischen der sich durch Erwärmung ausbildenden Lötverbindung und den Oberflächen der jeweils miteinander zu fügenden Komponenten, gilt es gleichsam auch die Wärmeleitfähigkeit des die Haftung vermittelnden Schichtsystems zu Zwecken einer sich bei thermischem Wärmeeintrag möglichst schnell und homogen ausbildenden Schmelze des auf wenigstens einem Schichtsystem aufgebrachten Lotmaterials zu verbessern.

Die Lösung der der Erfindung zugrunde liegenden Aufgabe ist im Anspruch 1 und 8 angegeben. Den Erfindungsgedanken vorteilhaft weiterbildende Merkmale sind Gegenstand der Unteransprüche sowie der weiteren Beschreibung unter Bezugnahme auf die Ausführungsbeispiele zu entnehmen.

Die Lösung der vorstehend skizzierten Aufgabe zeichnet sich dadurch, dass die wenigstens eine aus einem elektrisch nicht leitfähigem Material bestehende Komponente aus Glasmaterial oder Keramik besteht und die andere Komponente aus einem elektrisch nicht leitfähigen Glasmaterial oder aus Metall besteht, wobei das die Haftung vermittelnde Schichtsystem eine unmittelbar auf die Oberfläche der jeweiligen Komponente aufbringbare Haftvermittlerschicht sowie eine lötfähige Schicht aufweist, bei dem die Haftvermittlerschicht im Falle der Verwendung eines Glaslotes als lötfähige Schicht oxidische, karbidische, nitridische Komponenten und/oder Mischverbindungen aus den diesbezüglichen Komponenten enthält, und im Falle der Verwendung eines Metalllotes als lötfähige Schicht karbidische oder nitridische Komponenten und/oder Mischverbindungen aus den diesbezüglichen Komponenten enthält.

Durch die lösungsgemäße Abkehr von der bisherigen Verwendung von elementaren bzw. legierten Metallen hin zu oxidischen, karbidischen, nitridischen Komponenten oder deren Mischverbindungen, die darüber hinaus in vorteilhafter Weise auch mit weiteren Heteroatomen, beispielsweise mit Halogeniden ergänzt werden können, wird ein überaus großer Variantenreichtum an möglichen Haftvermittlerschichten gewonnen, deren stofflichen Eigenschaften in Bezug auf mechanische Eigenspannungen, hohe Haftfestigkeiten sowohl zu elektrisch nicht leitfähigen als auch zu metallischen Substraten, als auch in Bezug auf die jeweiligen Wärmeleiteigenschaften individuell an die jeweiligen Werkstoffeigenschaften der miteinander zu verbindenden Komponenten und Lotmaterialien ausgewählt bzw. angepasst werden können.

So eröffnen sich mehrere Möglichkeiten zur stofflichen Konfektionierung einer für die Haftvermittlerschicht in Frage kommenden Stoffverbindung. Neben der gezielten Auswahl eines Werkstoffes aus den vorstehend lösungsgemäß zusammengestellten Stoffgruppen, ist es auch möglich eine graduelle stoffliche Verteilung eines Stoffes oder einer Stoffgruppe innerhalb einer ausgewählten Stoffzusammensetzung mit zunehmender Haftvermittlerschichtdicke vorzunehmen. Ebenfalls denkbar in diesem Zusammenhang ist ein Multischichtenaufbau, bei dem Einzelschichten in unmittelbarer Abfolge jeweils aus unterschiedlichen stofflichen Zusammensetzungen bestehen.

Neben einer durch die stoffliche Variationsmöglichkeit optimiert einstellbaren Haftfestigkeit zur Oberfläche einer der zu fügenden Komponenten ist bei geeigneter Stoffwahl gleichsam auch eine Optimierung der Haftfestigkeit zu dem auf die Haftvermittlerschicht aufzubringenden lötfähigen Schicht erzielbar.

Zur Veranschaulichung der stofflich chemischen Zusammensetzung der lösungsgemäß in Frage kommenden Haftvermittlerschicht bei Verwendung eines Glaslotes, sei auf die nachfolgende Formel verwiesen:

Me(CₐN_{b}O_{c}S_{d}Xₑ)

Me in der vorstehend allgemeinen Formel steht stellvertretend für ein Metall oder eine Metallverbindung, in der wenigstens ein metallisches Element aus der Gruppe der Lanthaniden oder der Gruppen 3,4,5,6,7,8,13,14 des Periodensystems gewählt ist, vorzugsweise für Me = Ce, Y, Ti, Zr, V, Ta, Cr, Mo, W, Fe, Co, Ni, Al, Si sowie Kombinationen aus mehreren der vorstehenden, metallischen Elemente.
Ferner sind die Zählindizes a, b, c, d, e positive Größen, von denen jeweils mindestens ein Zählparameter ungleich 0 ist. X steht stellvertretend für Substanzen aus der Stoffgruppe der Halogene, insbesondere F, Cl, Br.

Anhand der vorstehenden, die stoffliche Zusammensetzung der Haftvermittlerschicht repräsentierenden Formel kann ersehen werden, welche große Vielfalt an möglichen, für die Haftvermittlerschicht in Frage kommenden Stoffzusammensetzungen besteht. Auch lassen sich, wie vorstehend erwähnt, einzelne oder mehrere Zählindizes, die jeweils den Stoffanteil einer chemischen Substanz des die Haftvermittlerschicht bestimmenden Werkstoffes charakterisieren, graduell bspw. mit zunehmender Haftvermittlerschichtdicke oder in stufenartiger Schichtabfolge variieren.

In besonders vorteilhafter Weise lässt sich die Haftvermittlerschicht partiell oder ganzflächig auf die Oberfläche einer zu fügenden Komponente im Wege eines CVD-oder PVD-Vakuumbeschichtungsverfahrens oder gleichsam auch im Wege eines galvanischen Abscheideverfahrens aufbringen. Selbstverständlich stehen auch weitere Materialabscheideverfahren für das Aufbringen der Haftvermittlerschicht sowie auch der weiteren Schichten, auf die im weiteren eingegangen wird, zur Verfügung, beispielsweise Sputter-, Metallepitaxieverfahren oder nasschemische Verfahren.

Auf die, auf die Oberfläche einer Komponente aufgebrachte Haftvermittlerschicht erfolgt die Abscheidung der lötfähigen Schicht, die im Falle eines Metalllotes aus mindestens einem der nachfolgenden elementaren Metalle oder Kombinationen aus mehreren dieser Metalle besteht: Ni, Cu, Ti, Zr, Fe, Pd, Ni, Cr, Au, Sn, Pb.

Das Abscheiden der Haftvermittlerschicht sowie der darauf aufzubringenden lötfähigen Schicht dient in erster Linie als Basis für eine stofflich innige Verbindung zu einem, beide Komponenten miteinander zu verbindenden Lotmaterial, beispielsweise in Form eines Glas- oder Metalllotes, das gesondert auf das vorstehend beschriebene Schichtsystem aufgebracht und entsprechend zur Schmelze gebracht wird.

Um zu vermeiden, dass die Oberfläche der lötfähigen Schicht oxidiert wird bspw. in Gegenwart von Luftsauerstoff, wodurch die Affinität der lötfähigen Schicht zur stofflichen Reaktion mit dem Lotmaterial beeinträchtigt wird, wird vorzugsweise auf die lötfähige Schicht eine Oxidationsschutzschicht aus einem edlen Metall, insbesondere Re, Ru, Os, Rh, Ir, Pd, Tt, Ag, Au oder Kombinationen aus mehreren dieser Metalle aufgebracht wird, wobei die edlen Metalle den Stoffzusammenschluss zwischen dem Lotmaterial und der unmittelbar unter der Oxidationsschutzschicht liegenden lötfähigen Schicht keineswegs zu beeinträchtigen vermögen.

Zur Schaffung der Voraussetzung, dass das zwischen beiden zu verbindenden Komponenten einzubringende Lotmaterial mit den Oberflächen der Komponenten einen dauerhaften und stabilen Lotverbund eingeht, sind die Oberflächen vorzugsweise beider Komponenten mit einem entsprechenden an den Werkstoff der Komponente angepassten Schichtsystem, zumindest bestehend aus der Haftvermittlerschicht sowie der lötfähigen Schicht, vorzugsweise im Falle des Metalllots zusätzlich mit der Oxidationsschutzschicht, zu versehen. Hierbei sollten die Haftvermittlerschicht sowie auch die lötfähige Schicht Schichtdicken von mindestens 10 nm aufweisen, so dass einerseits die Voraussetzung für ein dauerhaften Lotverbund gewährleistet werden kann, andererseits jedoch der für die Ausbildung des Schichtsystems erforderliche Materialeinsatz aus rein wirtschaftlichen Gründen möglichst gering gehalten wird.

Jeweils zwischen den auf den Oberflächen beider Komponenten aufgebrachten Schichtsystemen wird zur Herstellung des Lotverbundes ein Lotmaterial, beispielsweise in Form von Glas- oder Metalllot eingebracht, das mit oder ohne eines zusätzlichen Flussmittels im Wege thermischen Energieeintrages zur Schmelze gebracht wird. Zum Erhitzen des Lotmaterials stehen je nach werkstofflicher Beschaffenheit der miteinander zu verbindenden Komponenten mehrere Möglichkeiten zur Verfügung, so beispielsweise durch in Kontakt bringen wenigstens eines Teils des Lotverbundes mit einer Heizplatte, Einbringen des Lotverbundes samt Komponenten in einen Ofen, gezielte Applikation von Wärmestrahlung mit Hilfe eines Heizstrahlers, einer Mikrowellenquelle, oder eines Lasers, Ultraschallschweissen, Reibschweissen oder Anwenden einer Induktionsheizung, bis das Lotmaterial in Schmelze vorliegt und samt dem gleichfalls erweichten oder verflüssigten Schichtsystem eine stofflich innige Verbindung eingeht, die nach anschließendem Abkühlen fest erstarrt.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Darstellung des lösungsgemäßen Schichtsystems zur dauerhaften Verbindung zweier Komponenten und

- Fig. 2 bis 15: zeigen konkrete Anwendungsbeispiele für die lösungsgemäße Lötverbindung.

### Wege zur Ausführung der Erfindung, gewerbliche Verwendbarkeit

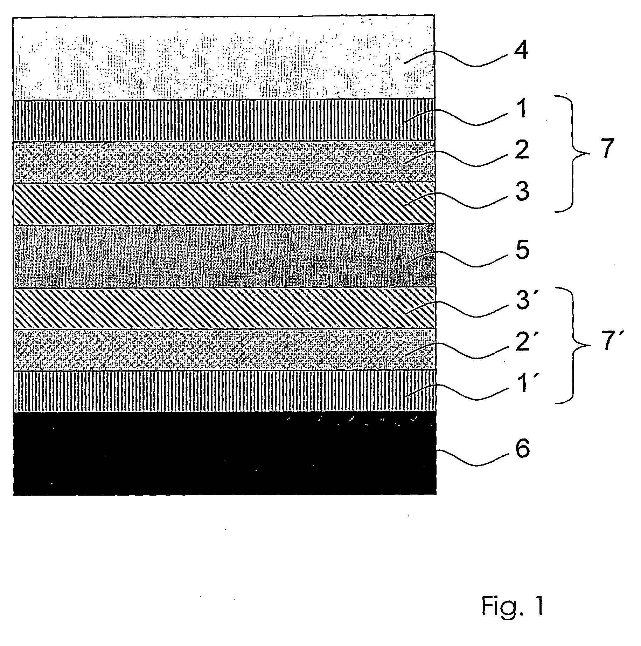

Figur 1 zeigt die Schichtabfolge einer Lötverbindung zur dauerhaften Verbindung zweier Komponenten 4, 6, von denen jeweils eine Komponente aus einem nicht elektrisch leitenden Material besteht, vorzugsweise aus einem glasartigen Material, beispielsweise Quarzglas oder einer Keramik. Die im Weiteren beschriebene Lötverbindung eignet sich somit zur Herstellung einer dauerhaften Verbindung zwischen einer Glaskomponente mit einer Metallkomponente sowie zwischen zwei Glaskomponenten oder ähnlichen elektrisch nicht leitfähigen Komponenten. Auf den Oberflächen der miteinander zu verbindenden Komponenten 4, 6 befinden sich jeweils aus drei Schichten bestehende Schichtsysteme 7, 7', die sich aus einer Haftvermittlerschicht 1, 1', einer lötfähigen Schicht 2, 2' sowie einer Oxidationsschutzschicht 3, 3' im Falle der Verwendung eines Metalllots zusammensetzen. Die aus oxidischen, karbidischen und/oder nitridischen Komponenten oder Mischverbindungen daraus, bestehenden Haftvermittlerschichten 1, 1' sind bezüglich ihrer Stoffwahl jeweils derart gewählt, so dass sie eine möglichst gute Benetzung bzw. Haftung und somit Verbindung unmittelbar mit der Oberfläche der jeweiligen Komponente 4, 6 eingehen. Als besonders geeignete Stoffverbindungen für Haftvermittlerschichten im Falle eines Glaslots sind nachfolgende Stoffverbindungen zu nennen:

Y₂O₃ , TiN, TiO₂, ZrOₓN_{y}, VC, V₂O₅, TaC, CrN, Cr₂O₃, WC, WNₓ, Fe₃C, Ni₃C, AlN, Si₃N₄, LaF₃, AlF₃, AlCl₃.

Zur Herstellung einer innigen Lötverbindung wird zwischen beiden Schichtsystemen 7, 7' Lotmaterial 5, vorzugsweise in Form von Glas- oder Metalllot eingebracht, das gezielt zur Schmelze gebracht wird, wobei sich nach Erkalten des Lotmaterials eine innige Lotverbindung zwischen beiden Komponenten 4, 6 einstellt.

Mit Hilfe der lösungsgemäßen Lötverbindung konnte gezeigt werden, dass ein Rahmen aus Edelstahl dauerhaft mit einer Floatglasscheibe gelötet werden kann. Hierzu wird jeweils auf der zu fügenden Oberfläche des Edelstahlrahmens sowie auch der Glasscheibe eine etwa 200 nm dicke Haftvermittlerschicht aus TiCN im Rahmen einer PVD-Vakuumbeschichtung aufgesputtert. Dies erfolgt mittels reaktivem Sputtern eines Ti-Targets unter Zugabe von Stickstoff und Methan als reaktive Gase innerhalb einer PVD-Beschichtungsanlage. Im Anschluss daran, wird eine Ti-Zwischenschicht auf jeweils die Haftvermittlerschichten aufgebracht, gefolgt von einer lotfähigen Ni-Schicht. Als Oxidationsschutzschicht wird abschließend eine jeweils 100 nm dicke Au-Schicht aufgebracht. Auf den jeweils beschichteten Bereich der Floatglasscheibe wird AgSn-Lotmaterial in Pastenform aufgebracht und anschließend der Edelstahlrahmen mit der beschichteten Oberseite bündig aufgelegt. Der Verbund aus Floatglasscheibe, Lotpaste und Rahmen wird in einem Ofen auf ca. 300°C erhitzt und anschließend langsam auf Raumtemperatur abgekühlt, so dass sich ein nahezu spannungsfreier dauerhafter Lotverbund zwischen beiden Komponenten ausbildet.

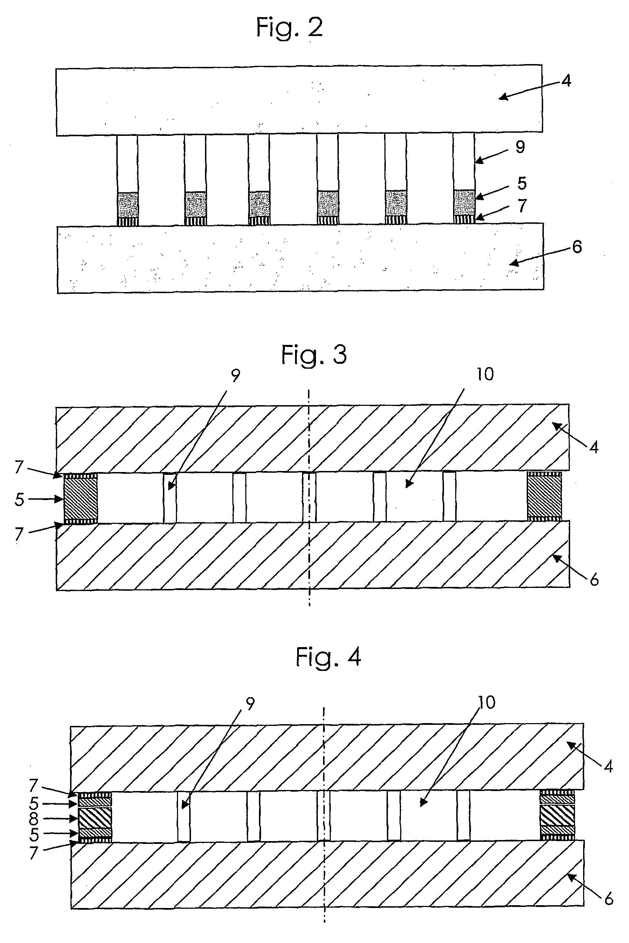

Fig. 2 stellt eine Querschnittsansicht durch zwei über metallische oder glasartige Abstandshalter 9 miteinander gefügte Glassscheiben 4, 6 dar. Es sei angenommen, dass die obere Glasscheibe 4 lose auf den Abstandshaltern 9 aufliegt oder fest mit diesen verklebt ist. Die jeweils unteren Enden der Abstandshalter 9 sind über ein Lotverbundsystem der vorstehend erläuterten Art mit der unteren Scheibe 6 fest verbunden. So ist unmittelbar mit den kopfseitigen Enden der Abstandshalter 9 ein Metalllot 5 vorgesehen, das an das Schichtsystem 7 angrenzt, das wiederum eine auf der unteren Glasscheibe 6 aufgebrachte Haftvermittlerschicht, eine darauf abgeschiedene lötbare Schicht sowie eine Oxidationsschutzschicht vorsieht.
Die beiden Scheiben 4 und 6 werden durch die Abstandshalter 9 auf Abstand gehalten.

Fig. 3 zeigt eine Querschnittsansicht durch zwei über metallische oder glasartige Abstandshalter 9 voneinander beabstandete Glassscheiben 4, 6. Am Randbereich der Glassscheiben 4, 6 sind diese gasdicht fest mit einem lösungsgemäßen Lotverbund gefügt. Hierbei sind die Oberflächen der Randbereiche beider Glasscheiben jeweils mit einem Schichtsystem 7 der vorstehend beschriebenen Art versehen, zwischen denen Lotmaterial 5 eingebracht ist, das nach entsprechendem Erwärmen und anschließenden Erkalten einen gasdichten Verbund ergibt, so dass es möglich ist Vakuumbedingungen im Volumen 10, das von beiden Glasscheiben eingeschlossen wird, dauerhaft zu konservieren.

Fig. 4 ist stellt eine zum vorstehenden Ausführungsbeispiel vergleichbare Querschnittsansicht dar, lediglich ist mittig zwischen dem Lotverbund ein Metallrahmen 8 eingebracht. Beidseitig zum Metallrahmen 8 ist über Lotmaterial 5 das Schichtsystem 7 vorgesehen, das das innere Volumen 10 gleichsam gasdicht abschließt, um auf diese Weise Vakuumbedingungen im Inneren dauerhaft zu konservieren. Im Übrigen wird um Wiederholungen zu vermeiden, auf die Bedeutung der bereits beschriebenen und in der Figur 4 dargestellten Bezugszeichen, wie auch im Weiteren, auf die vorstehenden Erläuterungen verwiesen.

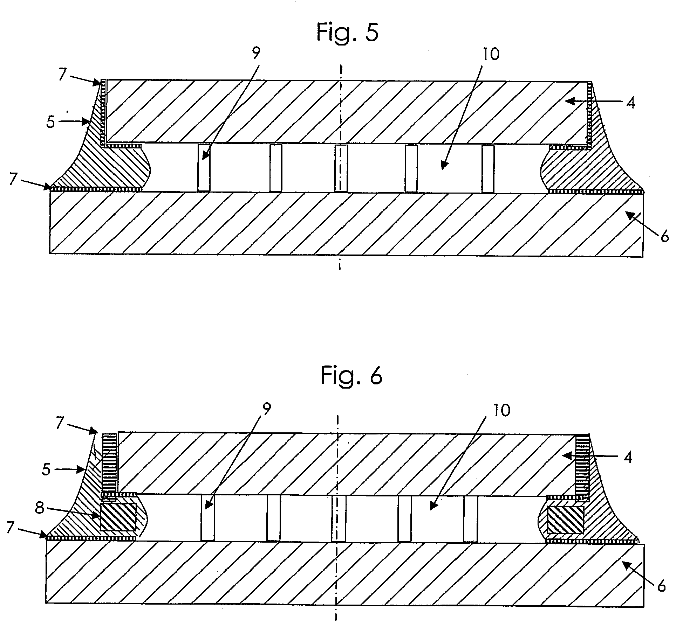

Fig. 5 zeigt eine Querschnittsansicht zwischen zwei unterschiedlich groß dimensionierte Glasscheiben 4, 6 an deren Randbereiche Schichtsysteme 7 in der gezeigten Form aufgebracht sind, zwischen denen Lotmaterial 5 eingebracht ist. Die beiden Scheiben 1 und 2 werden durch Abstandshalter 9 auf Abstand gehalten, wobei der Raum 10 zwischen den Scheiben 4 und 6 evakuiert ist.

Fig. 6 zeigt das Ausführungsbeispiel gemäß Fig. 5 ergänzt jedoch um einen innerhalb des Lotmaterials 5 integrierten Metallrahmen 8, vorzugsweise aus Edelstahl.

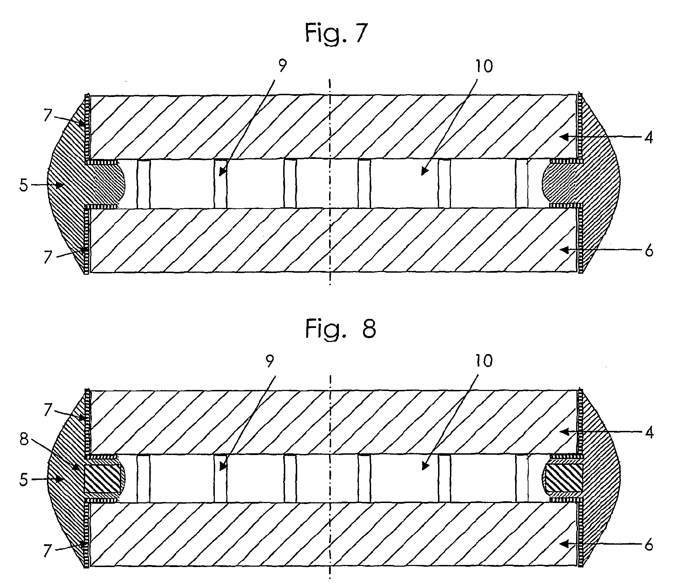

Fig. 7 zeigt eine Querschnittsansicht zweier Glasscheiben 4, 6, die von Abstandshaltern 9 auf Abstand gehalten werden und an deren Randbereichen das lösungsgemäße Schichtsystem 7 in der dargestellten Weise winkelig umfassend aufgebracht ist. Im Rand und Stoßbereich der Scheiben 4 und 6 sind beide Scheiben 4, 6 mit Lotmaterial 5 nach außen wulstartig abgefüllt, das zusammen mit den Schichtsystemen 7 eine dauerhafte, belastbare und gasdichte Lotverbindung darstellt.

Fig. 8 zeigt das Ausführungsbeispiel gemäß Fig. 7 ergänzt jedoch um einen innerhalb des Lotmaterials 5 integrierten Metallrahmen 8, vorzugsweise aus Edelstahl.

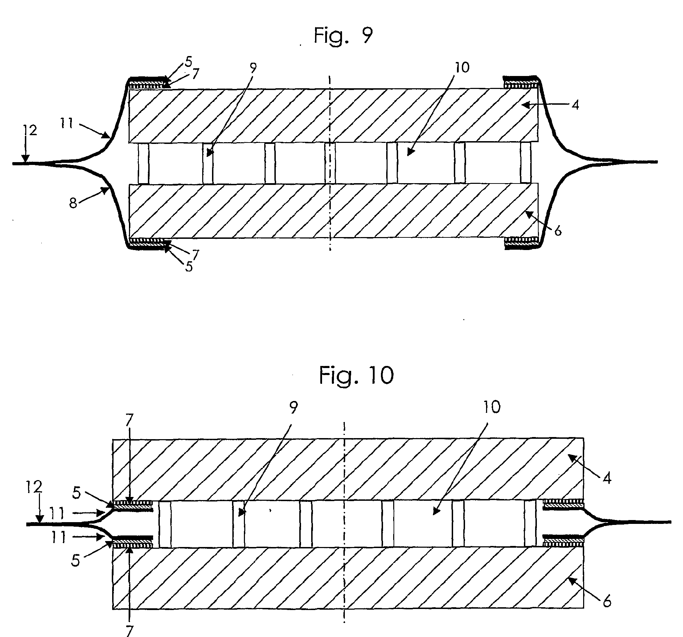

Fig. 9 zeigt eine Querschnittsansicht zweier Glasscheiben 4, 6, die von Abstandshaltern 9 auf Abstand gehalten werden, wobei metallische Folien 11 im Rand und/oder Stoßbereich der Außenseiten der beiden Scheiben 4 und 6 über die Schichtsysteme 7 mittels des metallischen Lotmaterials 5 vakuumdicht aufgebracht sind. Die beiden Folien 11 sind miteinander vakuumdicht verschweißt und bilden eine Schweißverbindung 12. Die beiden Scheiben 4 und 6 werden durch Abstandshalter 9 auf Abstand gehalten, wobei der Raum 10 zwischen den Scheiben 4 und 6 evakuiert ist.

Fig. 10 zeigt eine Querschnittsansicht vergleichbar zu jener in Figur 9, jedoch sind hier die metallischen Folien 11 im Rand und/oder Stoßbereich der Innenseiten der beiden Scheiben 4 und 6 über die Schichtsysteme 7 mittels des metallischen Lotmaterials 5 vakuumdicht aufgebracht sind. Die beiden Folien 11 sind miteinander vakuumdicht verschweißt und bilden jeweils eine Schweißverbindung 12. Die beiden Scheiben 4 und 6 werden durch Abstandshalter 9 auf Abstand gehalten, wobei der Raum 10 zwischen den Scheiben 4 und 6 evakuiert ist.

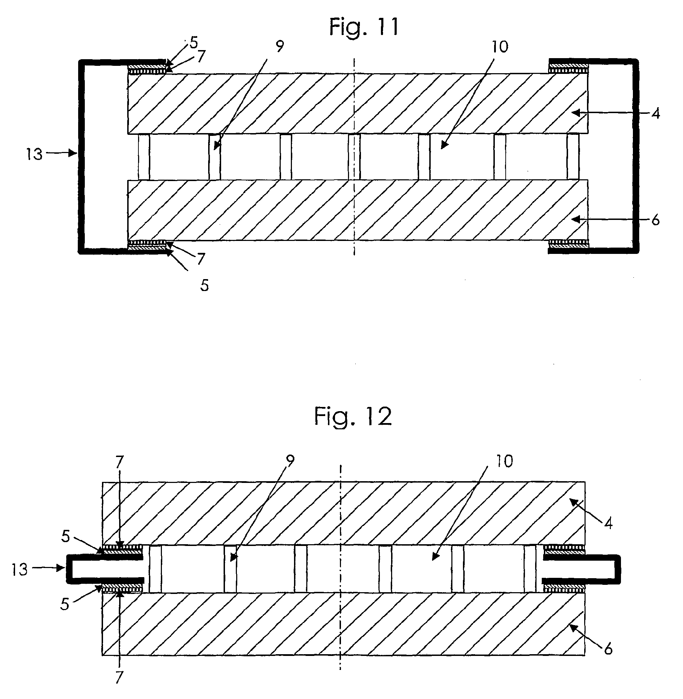

Fig. 11 zeigt eine Querschnittsansicht zweier Glasscheiben 4, 6, die von Abstandshaltern 9 auf Abstand gehalten werden, wobei ein metallischer Rahmen 13, welcher aus mindestens zwei Teilen besteht, im Rand und/oder Stoßbereich der Außenseiten der beiden Scheiben 4 und 6 über die Schichtsysteme 7 mittels des metallischen Lotmaterials 5 vakuumdicht aufgebracht ist. Die Rahmenteile 13 sind miteinander vakuumdicht verschweißt. Die beiden Scheiben 4 und 6 werden durch Abstandshalter 9 auf Abstand gehalten, wobei der Raum 10 zwischen den Scheiben 4 und 6 evakuiert ist.

Fig. 12 zeigt eine Querschnittsansicht vergleichbar zu jener in Figur 11, wobei ein metallischer Rahmen 13, welcher aus mindestens einem Teil besteht, im Rand und/oder Stoßbereich der Innenseiten der beiden Scheiben 4 und 6 über die Schichtsysteme 7 mittels des metallischen Lotmaterials 5 vakuumdicht aufgebracht ist. Falls der Rahmen aus mehreren Teilen besteht werden diese miteinander vakuumdicht verschweißt. Die beiden Scheiben 4 und 6 werden durch Abstandshalter 9 auf Abstand gehalten, wobei der Raum 10 zwischen den Scheiben 4 und 6 evakuiert ist.

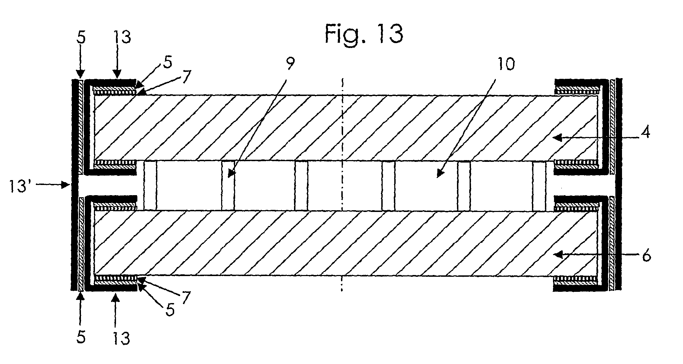

Fig.13 zeigt eine Querschnittsansicht zweier Glasscheiben 4, 6, die von Abstandshaltern 9 auf Abstand gehalten werden, wobei jeweils ein metallischer Rahmen 13, welcher aus mindesten zwei Teilen besteht, im Rand und/oder Stoßbereich der Außenseiten der beiden Scheiben 4 und 6 über die Schichtsysteme 7 mittels des metallischen Lotmaterials 5 vakuumdicht aufgebracht ist. Die beiden metallischen Rahmen 13 werden jeweils über metallisches Lotmaterial vakuumdicht mit einem umhüllenden metallischen Rahmen 13' miteinander verbunden. Die beiden Scheiben 4 und 6 werden durch Abstandshalter 9 auf Abstand gehalten, wobei der Raum 10 zwischen den Scheiben 4 und 6 evakuiert ist.

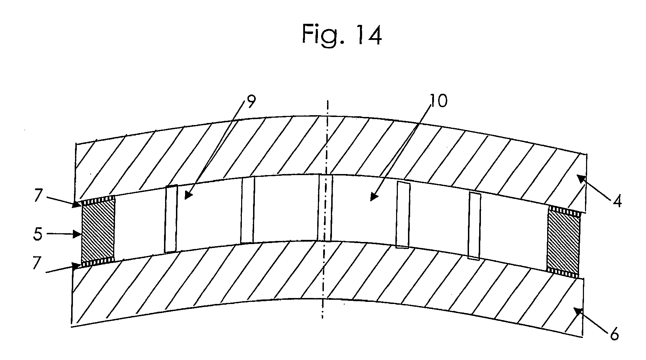

Fig.14 zeigt eine Querschnittsansicht zweier gekrümmt geformter Glasscheiben 4, 6, die von Abstandshaltern 9 auf Abstand gehalten werden, wobei der Randverbund zwischen mindestens einer gekrümmten Scheibe 4 und einer weiteren zueinander flächig ausgerichteten Scheibe 6 wie in einer der vorher beschrieben Abbildungen Fig. 2-13 hergestellt wird.

Grundsätzlich ist es auch möglich sämtliche in den Figuren 2 bis 13 gezeigten planen Glasscheiben gekrümmt auszubilden, wie dies in Figur 14 gezeigt ist.

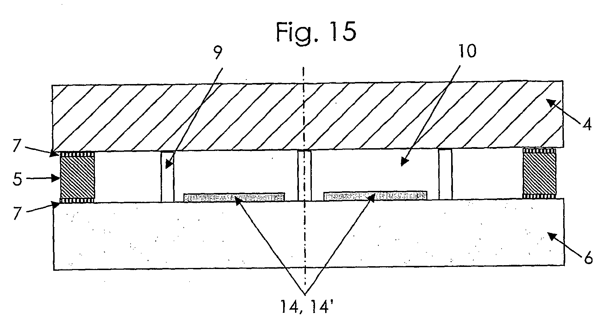

Fig.15 zeigt eine Querschnittsansicht zweier Glasscheiben 4, 6, die von Abstandshaltern 9 auf Abstand gehalten werden, wobei der Randverbund zwischen einer Scheibe 4 und einer weiteren zueinander flächig ausgerichteten Fügepartner 6 wie in einer der vorher beschrieben Abbildungen Fig.2-14 hergestellt wird. Das Verbundsystem dient zur gasdichten Einhausung von Solarzellen 14 und oder OLEDs 14'.

### Bezugszeichenliste

- 1,1': Haftvermittlerschicht
- 2,2': lötfähige Schicht
- 3,3': Oxidationsschutzschicht
- 4: Komponente
- 5: Lötmaterial
- 6: Komponente
- 7,7': Schichtsystem
- 8: Metallrahmen
- 9: Abstandshalter
- 10: Volumen
- 11: Metallfolie
- 12: Schweißverbindung
- 13, 13': Metallrahmen
- 14,14': OLED, Solarzelle

## Patentansprüche

1. Verfahren zum dauerhaften Verbinden zweier Komponenten, von denen wenigstens eine Komponente aus einem elektrisch nicht leitfähigem Material_besteht, durch Löten unter Verwendung eines Glaslotes als Lotmaterial, bei dem auf mindestens eine der beiden Komponenten jeweils ein eine Haftung vermittelndes Schichtsystem aufgebracht wird, auf das das Lotmaterial aufgebracht wird, das mittel- oder unmittelbar mit der anderen Komponente in Kontakt gebracht wird und auf eine für das Lotmaterial charakteristische Lottemperatur erwärmt wird und nach Erkalten zu einer dauerhaften Lötverbindung zwischen beiden Komponenten führt, **dadurch gekennzeichnet, dass** die wenigstens eine aus einem elektrisch nicht leitfähigen Material bestehende Komponente aus Glasmaterial oder Keramik besteht und die andere Komponente aus einem elektrisch nicht leitfähigen Glasmaterial oder aus Metall besteht, und
dass das die Haftung vermittelnde Schichtsystem eine unmittelbar auf die Komponente aufzubringende Haftvermittlerschicht sowie eine lötfähige Schicht aufweist, bei dem die Haftvermittlerschicht oxidische, karbidische, nitridische Komponenten oder Mischverbindungen hieraus enthält.

2. Verfahren nach Anspruch 1,
**dadurch gekennzeichnet, dass** als Haftvermittlerschicht eine Metallverbindung verwendet wird, die sich durch die nachstehende chemische Zusammensetzung auszeichnet: Me (CₐN_{b}O_{c}S_{d}Xₑ), wobei Me stellvertretend für ein Metall oder eine Metallverbindung steht, wenigstens einer der Zählindizes a, b, c, d, e ungleich Null ist und X stellvertretend für F, Cl oder Br steht.

3. Verfahren nach Anspruch 1 oder 2,
**dadurch gekennzeichnet, dass** die Haftvermittlerschicht Heteroatome aufweist, vorzugsweise aus der Gruppe der Halogeniden.

4. Verfahren nach einem der Ansprüche 1 bis 3,
**dadurch gekennzeichnet, dass** die Haftvermittlerschicht wenigstens eines der metallischen Elemente aus den nachfolgenden Haupt- oder Nebengruppen des Periodensystems enthält: Lanthaniden, Gruppen 3, 4, 5, 6, 7, 8, 13, 14.

5. Verfahren nach Anspruch 4,
**dadurch gekennzeichnet, dass** die Haftvermittlerschicht wenigstens ein metallisches Element aus der Gruppe der nachfolgenden Elemente enthält: Ce, Y, Ti, Zr, V, Ta, Cr, Mo, W, Fe, Co, Ni, Al, Si.

6. Verfahren nach einem der Ansprüche 2 bis 5,
**dadurch gekennzeichnet, dass** die Haftvermittlerschicht eine Schichtdicke aufweist, längs der die stoffliche Zusammensetzung der Haftvermittlerschicht variiert wird, indem wenigstens einer der Zählindizes a, b, c, d, e, variiert wird.

7. Verfahren nach einem der Ansprüche 1 bis 6,
**dadurch gekennzeichnet, dass** als Haftvermittlerschicht Y₂O₃, TiN, TiO₂, ZrOₓN_{y}, VC, V₂O₅, TaC, CrN, Cr₂O₃, WC, WNₓ, Fe₃C, Ni₃C, AIN, Si₃N₄, LaF₃, AlF₃, AlCl₃ verwendet wird.

8. Verfahren zum dauerhaften Verbinden zweier Komponenten, von denen wenigstens eine Komponente aus einem elektrisch nicht leitfähigen Material_besteht, durch Löten unter Verwendung eines Metalllotes als Lotmaterial, bei dem auf mindestens eine der beiden Komponenten jeweils ein eine Haftung vermittelndes Schichtsystem aufgebracht wird, auf das das Lotmaterial aufgebracht wird, das mittel- oder unmittelbar mit der anderen Komponente in Kontakt gebracht wird und auf eine für das Lotmaterial charakteristische Lottemperatur erwärmt wird und nach Erkalten zu einer dauerhaften Lötverbindung zwischen beiden Komponenten führt, **dadurch gekennzeichnet, dass** die wenigstens eine aus einem elektrisch nicht leitfähigen Material bestehende Komponente aus Glasmaterial oder Keramik besteht und die andere Komponente aus einem elektrisch nicht leitfähigen Glasmaterial oder aus Metall besteht, und
dass das die Haftung vermittelnde Schichtsystem eine unmittelbar auf die Komponente aufzubringende Haftvermittlerschicht sowie eine lötfähige Schicht aufweist, bei dem die Haftvermittlerschicht karbidische oder nitridische Komponenten oder Mischverbindungen hieraus enthält.

9. Verfahren nach einem der Ansprüche 1 bis 8,
**dadurch gekennzeichnet, dass** die lötfähige Schicht unmittelbar auf die Haftvermittlerschicht aufgebracht wird.

10. Verfahren nach Anspruch 8 oder 9,
dadurch ge kennzeichnet, dass das die Haftung vermittelnde Schichtsystem eine Schicht vorsieht, die auf die lötfähige Schicht aufgebracht wird und wenigstens ein Edelmetall aufweist, insbesondere ein Edelmetall oder mehrere Edelmetalle aus der nachfolgenden Gruppe: Re, Ru, Os, Rh, Ir, Pd, Pt, Ag, Au.

11. Verfahren nach einem der Ansprüche 1 bis 10,
**dadurch gekennzeichnet, dass** das die Haftung vermittelnde Schichtsystem, zumindest bestehend aus der Haftvermittlerschicht und der lötfähigen Schicht, mit einer Schichtsystemdicke von wenigstens 20 nm ausgebildet wird.

12. Verfahren nach einem der Ansprüche 1 bis 11,
**dadurch gekennzeichnet, dass** das die Haftung vermittelnde Schichtsystem im Wege eines CVD-, PVD-, Sputter- oder Metallepitaxieverfahrens, eines nasschemischen Verfahrens oder im Wege eines galvanischen Abscheideverfahrens hergestellt wird.

13. Verfahren nach einem der Ansprüche 1 bis 12,
**dadurch gekennzeichnet, dass** das Erwärmen des Lotmaterials durch lokales Erwärmen des Lotmaterials oder durch gesamtheitliches Erwärmen des Schichtsystems samt der miteinander zu verbindenden Komponenten erfolgt.

14. Verfahren nach einem der Ansprüche 1 bis 13,
**dadurch gekennzeichnet, dass** die wenigstens eine aus Glasmaterial bestehende Komponente mit der einen zweiten Komponente aus Edelstahl oder Kupfer verbunden wird.

15. Verfahren nach einem der Ansprüche 8 bis 14,
**dadurch gekennzeichnet, dass** als lötfähige Schicht ein Schichtmaterial gewählt wird, das mindestens eines der folgenden Metalle oder Kombinationen aus mehreren der folgenden Metalle aufweist: Ni, Cu, Ti, Zr, Fe, Pd, Cr, Au, Sn, Pb.

16. Verfahren nach einem der Ansprüche 1 bis 7,
**dadurch gekennzeichnet, dass** als lötfähige Schicht ein Schichtmaterial gewählt wird, das mindestens eines der folgenden Metalle oder Kombinationen aus mehreren der folgenden Metalle aufweist: Ni, Cu, Ti, Zr, Fe, Cr, Sn, Pb.

## Claims

1. A method for the permanent connection of two components, of which at least one component consists of an electrically nonconductive material, by soldering employing a glass solder as the solder material, in which a layer system providing adhesion is applied to at least one of the two components, onto which the solder material is applied, which is brought indirectly or directly into contact with the other component and is heated to a soldering temperature characteristic for the solder material and results in a permanent soldered connection between both components after cooling,
**characterized in that** the at least one component consists of an electrically nonconductive material of glass material or ceramics and the other component consists of an electrically nonconductive glass material or metal, and
**in that** the layer system providing adhesion has an adhesive layer applicable directly to the component and a solderable layer, in which the adhesive layer contains oxidic, carbidic, or nitridic compounds or mixed compounds thereof.

2. The method according to Claim 1,
**characterized in that** a metal compound is used as the adhesive layer, which is distinguished by the following chemical composition: Me(CₐN_{b}O_{c}S_{d}Xₑ), Me representing a metal or a metal compound, at least one of the numeric indices a, b, c, d, e not being equal to zero, and X representing F, Cl, or Br.

3. The method according to Claim 1 or 2,
**characterized in that** the adhesive layer has heteroatoms, preferably from the group of halogenides.

4. The method according to one of Claims 1 to 3,
**characterized in that** the adhesive layer contains at least one of the metal elements from the following primary or secondary groups of the periodic system: lanthanides, groups 3, 4, 5, 6, 7, 8, 13, 14.

5. The method according to Claim 4,
**characterized in that** the adhesive layer contains at least one metal element from the group of the following elements: Ce, Y, Ti, Zr, V, Ta, Cr, Mo, W, Fe, Co, Ni, Al, Si.

6. The method according to one of Claims 2 to 5,
**characterized in that** the adhesive layer has a layer thickness along which the material composition of the adhesive layer is varied, **in that** at least one of the numeric indices a, b, c, d, e is varied.

7. The method according to one of Claims 1 to 6,
**characterized in that** Y₂O₃, TiN, TiO₂, ZrOₓN_{y}, VC, V₂O₅, TaC, CrN, Cr₂O₃, WC, WNₓ, Fe₃C, Ni₃C, AIN, Si₃N₄, LaF₃, AlF₃, AlCl₃ is used as the adhesive layer.

8. A method for the permanent connection of two components, of which at least one component comsists of an electrically nonconductive material, by soldering employing a metal solder as the solder material, in which a layer system providing adhesion is applied to at least one of the two components, on which the solder material is applied, which is brought indirectly or directly into contact with the other component and is heated to a soldering temperature characteristic for the solder material and results in a permanent soldered connection between both components after cooling,
**characterized in that** the at least one component consists of an electrically nonconductive material of glass material or ceramics and the other component consists of an electrically nonconductive glass material or metal, and
**in that** the layer system providing adhesion has an adhesive layer applicable directly to the component and a solderable layer, in which the adhesive layer contains carbidic or nitridic components or mixed compounds thereof.

9. The method according to one of Claims 1 to 8,
**characterized in that** the solderable layer is applied directly to the adhesive layer.

10. The method according to Claim 8 or 9,
**characterized in that** the layer system providing adhesion provides a layer which is applied to the solderable layer and has at least one noble metal, in particular one noble metal or multiple noble metals from the following group: Re, Ru, Os, Rh, Ir, Pd, Pt, Ag, Au.

11. The method according to one of Claims 1 to 10,
**characterized in that** the layer system providing adhesion, at least consisting of the adhesive layer and the solderable layer, is implemented having a layer system thickness of at least 20 nm.

12. The method according to one of Claims 1 to 11,
**characterized in that** the layer system providing adhesion is produced in the course of a CVD, PVD, sputtering, or metal epitaxy method, a wet chemical method, or in the course of a galvanic deposition method.

13. The method according to one of Claims 1 to 12,
**characterized in that** the heating of the solder material is performed by local heating of the solder material or by heating of the layer system in its entirety including the components to be connected to one another.

14. The method according to one of Claims 1 to 13,
**characterized in that** the at least one component consisting of glass material is connected to the at least one second component made of stainless steel or copper.

15. The method according to one of Claims 8 to 14,
**characterized in that** a layer material is selected as the solderable material which has at least one of the following metals or combinations of a plurality of the following metals: Ni, Cu, Ti, Zr, Fe, Pd, Cr, Au, Sn, Pd.

16. The method according to one of Claims 1 to 7,
**characterized in that** a layer material is selected as the solderable material which has at least one of the following metals or combinations of a plurality of the following metals: Ni, Cu, Ti, Zr, Fe, Cr, Sn, Pd.

## Revendications

1. Procédé lequel permet de relier durablement deux composants dont au moins un composant est constitué d'un matériau électriquement isolant, en effectuant un brasage mettant en oeuvre un matériau vitreux comme matériau d'apport, et lors duquel au moins un des deux composants est pourvu d'un système de couches ayant un effet promoteur d'adhérence et servant de support lors de l'application du matériau d'apport qui est mis en contact, indirectement ou directement, avec l'autre composant et qui est chauffé à une température de brasage caractéristique dudit matériau d'apport pour ainsi obtenir, suite au refroidissement, une brasure durable reliant les deux composants, caractérisé en que l'au moins un composant constitué d'un matériau électriquement isolant est constitué d'un matériau vitreux ou céramique alors que l'autre composant est constitué d'un matériau vitreux électriquement isolant ou d'un métal, et
que le système de couches ayant un effet promoteur d'adhérence comporte une couche de promoteur d'adhérence destinée à être appliquée directement sur ledit composant ainsi qu'une couche susceptible de subir un brasage, ladite couche de promoteur d'adhérence contenant des constituants de type oxyde, carbure, nitrure ou des composés résultant d'un mélange de ces derniers.

2. Procédé selon la revendication 1,
**caractérisé en ce que** l'on utilise, en tant que couche de promoteur d'adhérence, un composé métallique ayant la composition chimique indiquée ci-après : Me (CₐN_{b}O_{c}S_{d}Xₑ), Me représentant un métal un ou composé métallique, au moins un des indices numériques a, b, c, d, e adoptant une valeur autre que zéro, et X représentant F, Cl ou Br.

3. Procédé selon les revendications 1 ou 2,
**caractérisé en ce que** la couche de promoteur d'adhérence comporte des hétéroatomes, de préférence issus du groupe des halogénures.

4. Procédé selon l'une des revendications 1 à 3,
**caractérisé en ce que** la couche de promoteur d'adhérence contient au moins un élément métallique issu des groupes principaux ou des groupes d'éléments de transition du tableau périodique indiqués ci-après : lanthanides, groupes 3, 4, 5, 6, 7, 8, 13, 14.

5. Procédé selon la revendication 4,
**caractérisé en ce que** la couche de promoteur d'adhérence contient au moins un élément métallique issu du groupes contenant les éléments suivants : Ce, Y, Ti, Zr, V, Ta, Cr, Mo, W, Fe, Co, Ni, Al, Si.

6. Procédé selon l'une des revendications 2 à 5, **caractérisé en ce que** la couche de promoteur d'adhérence comporte une épaisseur de couche le long de laquelle la composition matérielle de la couche de promoteur d'adhérence subit des variations en faisant varier au moins un des indices numériques a, b, c, d, e.

7. Procédé selon l'une des revendications 1 à 6, **caractérisé en ce que** l'on utilise, en tant que couche de promoteur d'adhérence du Y₂O₃, TiN, TiO₂, ZrOₓN_{y}, VC, V₂O₅, TaC, CrN, Cr₂O₃, WC, WNₓ, Fe₃C, Ni₃C, AlN, Si₃N₄, LaF₃, AlF₃, AlCl₃.

8. Procédé lequel permet de relier durablement deux composants dont au moins un composant est constitué d'un matériau électriquement isolant, en effectuant un brasage mettant en oeuvre un matériau vitreux comme matériau d'apport, et lors duquel au moins un des deux composants est pourvu d'un système de couches ayant un effet promoteur d'adhérence et servant de support lors de l'application du matériau d'apport qui est mis en contact, indirectement ou directement, avec l'autre composant et qui est chauffé à une température de brasage caractéristique dudit matériau d'apport pour ainsi obtenir, suite au refroidissement, une brasure durable reliant les deux composants, caractérisé en que l'au moins un composant constitué d'un matériau électriquement isolant est constitué d'un matériau vitreux ou céramique alors que l'autre composant est constitué d'un matériau vitreux électriquement isolant ou d'un métal, et
que le système de couches ayant un effet promoteur d'adhérence comporte une couche de promoteur d'adhérence destinée à être appliquée directement sur ledit composant ainsi qu'une couche susceptible de subir un brasage, ladite couche de promoteur d'adhérence contenant des constituants de type carbure ou nitrure ou des composés résultant d'un mélange de ces derniers.

9. Procédé selon l'une des revendications 1 à 8, **caractérisé en ce que** l'on applique la couche susceptible de subir un brasage est directement sur la couche de promoteur d'adhérence.

10. Procédé selon les revendications 8 ou 9,
**caractérisé en ce que** le système de couches ayant un effet promoteur d'adhérence est pourvu d'une couche qui est appliquée sur la couche susceptible de subir un brasage et qui comporte un au moins un métal noble, notamment un métal noble ou plusieurs métaux nobles issu (s) du groupe suivant : Re, Ru, Os, Rh, Ir, Pd, Pt, Ag, Au.

11. Procédé selon l'une des revendications 1 à 10,
**caractérisé en ce que** le système de couches ayant un effet promoteur d'adhérence, lequel est au moins constitué de la couche de promoteur d'adhérence et de la couche susceptible de subir un brasage, est formé de manière à ce que l'épaisseur du système de couches soit supérieure ou égale à 20 nm.

12. Procédé selon l'une des revendications 1 à 11,
**caractérisé en ce que** le système de couches ayant un effet promoteur d'adhérence est réalisé en mettant en oeuvre un procédé de CVD, de PVD, de pulvérisation cathodique ou d'épitaxie de métaux, un procédé chimique par voie humide ou un procédé d'électrodéposition.

13. Procédé selon l'une des revendications 1 à 12,
**caractérisé en ce que** la chauffe du matériau d'apport est effectuée en chauffant le matériau d'apport localement ou en chauffant l'ensemble formé par le système de couches et les composants destinés à être reliés l'un à l'autre.

14. Procédé selon l'une des revendications 1 à 13,
**caractérisé en ce que** l'au moins un composant constitué d'un matériau vitreux et relié à l'unique deuxième composant en acier inoxydable ou en cuivre.

15. Procédé selon l'une des revendications 8 à 14,
**caractérisé en ce que** l'on choisit, en tant que couche susceptible de subir un brasage, un matériau de couche comportant au moins un des métaux suivants ou des combinaisons de plusieurs des métaux suivants: Ni, Cu, Ti, Zr, Fe, Pd, Cr, Au, Sn, Pb.

16. Procédé selon l'une des revendications 1 à 7,
**caractérisé en ce que** l'on choisit, en tant que couche susceptible de subir un brasage, un matériau de couche comportant au moins un des métaux suivants ou des combinaisons de plusieurs des métaux suivants: Ni, Cu, Ti, Zr, Fe, Cr, Sn, Pb.
